(19) Europäisches Patentamt
European Patent Office
Office européen des brevets

(11) **EP 1 836 273 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **05759941.7**

(22) Anmeldetag: **06.07.2005**

(51) Int Cl.:
*C09K 11/78* (2006.01)    *D21H 21/48* (2006.01)
*B41M 3/06* (2006.01)    *B42D 25/355* (2014.01)
*B42D 25/00* (2014.01)    *B42D 25/29* (2014.01)
*C09D 11/50* (2014.01)    *G07D 7/12* (2016.01)

(86) Internationale Anmeldenummer:
**PCT/EP2005/007311**

(87) Internationale Veröffentlichungsnummer:
**WO 2006/005498 (19.01.2006 Gazette 2006/03)**

(54) **WERTDOKUMENT**

VALUABLE DOCUMENT

PAPIER-VALEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.07.2004 DE 102004034189**

(43) Veröffentlichungstag der Anmeldung:
**26.09.2007 Patentblatt 2007/39**

(60) Teilanmeldung:
**16204439.0**

(73) Patentinhaber: **Giesecke & Devrient GmbH**
**81677 München (DE)**

(72) Erfinder:
• **SCHWENK, Gerhard**
**82178 Puchheim (DE)**

• **GRAUVOGL, Gregor**
**82041 Oberhaching (DE)**
• **MAGG, Ulrich**
**85232 Feldgeding (DE)**
• **SCHOLZ, Ulrich**
**84428 Buchbach (DE)**

(74) Vertreter: **Klunker . Schmitt-Nilson . Hirsch Patentanwälte**
**Destouchesstraße 68**
**80796 München (DE)**

(56) Entgegenhaltungen:
**EP-A- 1 241 242    WO-A-03/104533**
**DE-A1- 10 056 462    US-B1- 6 506 476**

**Beschreibung**

Die Erfindung betrifft einen Lumineszenzstoff, ein Wertdokument, ein Sicherheitselement und ein Sicherheitspapier mit zumindest einem Lumineszenzstoff als Echtheitsmerkmal. Die Erfindung betrifft auch verschiedene Verfahren zur Prüfung der Echtheit derartiger Wertdokumente, eines Sicherheitselementes oder eines Sicherheitspapieres sowie Verfahren zu deren Herstellung.

Unter Sicherheitspapier wird nachfolgend Papier verstanden, das z.B. bereits mit Sicherheitselementen, wie Wasserzeichen, Sicherheitsfaden, Hologrammpatch usw., ausgestattet ist, aber noch nicht umlauffähig ist und Zwischenprodukt bei der Herstellung des Wertdokumentes ist. Unter Wertdokument wird das umlauffähige Produkt verstanden.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente für die Produktsicherung zu verstehen.

Die Absicherung von Wertdokumenten gegen Fälschung mittels lumineszierender Substanzen ist bereits seit langem bekannt. In der EP 0 052 624 B2 werden beispielsweise lumineszierende Substanzen auf der Basis von mit Seltenerdmetallen dotierten Wirtsgittern verwendet.

WO 03/104533 A1 offenbart Lumineszenzstoffe zur Verwendung als Lasermaterialien und Szintillatormaterialien. Offenbart werden unter anderem Yttrium-Ytterbium-Niobate und Yttrium-Ytterbium-Tantalate. Die Lumineszenzstoffe liegen als Einkristalle vor.

EP 1 241 242 A2 offenbart Anti-Stokes-Leuchtstoffe für die Anwendung in Sicherheitsdokumenten. Die Anti-Stokes-Leuchtstoffe sind Oxisulfide.

US 6,506,476 B1 offenbart Granate und Perowskite, die jeweils Eisen oder Chrom enthalten, zur Echtheitssicherung von Wertdokumenten.

Vorzugsweise werden Stoffe verwendet, bei denen entweder die Absorption oder die Emission außerhalb des sichtbaren Spektralbereichs liegen.

Liegen die Emissionen bei Wellenlängen zwischen ca. 400 nm und ca.

700 nm, so sind die lumineszierenden Substanzen bei geeigneter Anregung mit dem Auge nachweisbar. Für manche Anwendungen ist dies erwünscht, z.B. bei der Echtheitsüberprüfung durch Beleuchtung mit UV-Licht. Für andere Anwendungen ist es hingegen von Vorteil, wenn die Emission außerhalb des sichtbaren Spektralbereichs liegt, da dann spezielle Detektoren zum Nachweis der Stoffe notwendig sind.

Lumineszenzstoffe mit charakteristischen Eigenschaften, die sich zur Absicherung von Wertdokumenten und insbesondere für eine automatische Echtheitserkennung eignen, sind jedoch in ihrer Zahl beschränkt. Die meisten anorganischen und organischen Lumineszenzstoffe haben uncharakteristische, breite Spektren, eine zu geringe Emissionsintensität und sind überdies oft handelsüblich. Dies erschwert ihre Identifizierung und macht die gleichzeitige Verwendung mehrerer dieser Stoffe unpraktikabel.

Ausgehend von diesem Stand der Technik liegt der Erfindung die Aufgabe zugrunde, die Anzahl von Lumineszenzstoffen, die sich als Echtheitsmerkmal für Wertdokumente eignen, zu erhöhen, und insbesondere Wertdokumente und Sicherheitspapiere mit Echtheitsmerkmalen in Form von Lumineszenzstoffen zu schaffen, die sich von Wertdokumenten und Sicherheitspapieren mit bisher bekannten Lumineszenzstoffen durch ein charakteristisch abgeändertes Anregungs- und/ oder Emissionsspektrum unterscheiden.

Die Lösung dieser Aufgabe ergibt sich aus den unabhängigen Ansprüchen. Weiterbildungen sind Gegenstand der Unteransprüche.

Erfindungsgemäß wird zur Absicherung mindestens ein Lumineszenzstoff verwendet. Bevorzugt liegt dessen Emissionsspektrum im sichtbaren oder infraroten Spektralbereich (VIS, IR). Besonders bevorzugt emittiert der Lumineszenzstoff im Nahen Infrarot (NIR). Bevorzugt erfolgt auch die Anregung im Nahen Infrarot.

Je nach eingesetztem erfindungsgemäßem Lumineszenzstoff kann die Emissionsbande der Stokesschen oder Antistokesschen Regel folgen oder es kann Quasiresonanz beobachtet werden.

Die erfindungsgemäßen Sicherheitspapiere, Sicherheitselemente und Wertdokumente umfassen einen Lumineszenzstoff der allgemeinen Formel

$$XZO_4$$

wobei

X für $Y_b\, La_c\, Pr_e\, Nd_f\, Er_n\, Yb_p\, Fe(III)_v$
und

Z für $Nb_{za}\, Ta_{zb}$

steht und

$$b + c + e + f + n + p + v = 1$$

und b, c, e, f, n, p und v jeweils von 0 bis 1 reichen, und

$$za + zb = 1$$

und za und zb jeweils von 0 bis 1 reichen.

Die erfindungsgemäßen Lumineszenzstoffe haben die allgemeine Formel

$$XZO_4$$

wobei X für $Y_b La_c Pr_e Nd_f Er_n Yb_p Fe(III)_v$ steht und

$$b+c+e+f+n+p+v = 1$$

und

b, c, e, f, n, p und v jeweils von 0 bis 1 reichen,
wobei wenigstens zwei Seltenerdelemente in den Kombinationen Er und Yb mit $n \neq 0$ und $p \neq 0$ oder
Nd und Yb mit $f \neq 0$ und $p \neq 0$ oder
Er und Nd mit $n \neq 0$ und $f \neq 0$ vorliegen,
Z für $Nb_{za} Ta_{zb}$
steht und

$$za + zb = 1$$

und za und zb jeweils von 0 bis 1 reichen.

Die für X und Z aufgelisteten Symbole entsprechen den Symbolen im Periodensystem der Elemente, O steht für Sauerstoff.
Die X-Elemente Y, La, Pr, Nd, Er, und Yb weisen dabei die Oxidationsstufe 3 auf.
Das X-Element Fe weist dabei die Oxidationsstufe 3 auf.
Die Z-Elemente Nb und Ta weisen dabei die Oxidationsstufe 5 auf.
Selbstverständlich ist es möglich, einzelne X - und/oder Z - Elemente durch weitere Elemente, wie z.B. Indium (In), Aluminium (Al), Magnesium (Mg) und Chrom (Cr), zu ersetzen, solange die stöchiometrischen Verhältnisse berücksichtigt werden und das Kristallgitter dies zulässt. Insbesondere sind Dotierungen mit Chrom und Aluminium bzw. mit Magnesium und Aluminium bevorzugt.
In einer bevorzugten Ausführungsform der erfindungsgemäßen Sicherheitspapiere, Sicherheitselemente und Wertdokumente liegt als X - Element zumindest La oder Y oder beide vor, d.h. es gilt, dass in der allgemeinen Formel $b \neq 0$ und / oder $c \neq 0$. Selbstverständlich können auch alle anderen X - Elemente oder nur ausgewählte davon zusätzlich vorliegen.
In einer weiter bevorzugten Ausführungsform der erfindungsgemäßen Sicherheitspapiere, Sicherheitselemente und Wertdokumente steht X für $Y_b La_c$ und $b + c = 1$ und $0 < b < 1$ und $0 < c < 1$. In diesem Falle liegen nur die beide Elemente La und Y als X - Elemente in der lumineszierenden Substanz vor. Weiter bevorzugt ist eine Ausführungsform der erfindungsgemäßen Sicherheitspapiere, Sicherheitselemente und Wertdokumente, bei der X für La oder für Y steht, d.h. dass nur ein X - Element in der allgemeinen Formel vorhanden ist.
Weiterhin ist bevorzugt, wenn im Lumineszenzstoff des erfindungsgemäßen Sicherheitspapiers, Sicherheitselements oder Wertdokuments wenigstens ein, wenigstens zwei oder wenigstens drei Seltenerdelemente als X - Elemente vorliegen, d.h. dass $c \neq 0$ und / oder $e \neq 0$ und / oder $f \neq 0$ und / oder $n \neq 0$ und / oder $p \neq 0$.
Insbesondere sind die Seltenerdelemente ausgewählt aus der Gruppe Er, Yb und Nd, d.h $f \neq 0$ und/oder $n \neq$

0 und/oder p ≠ 0. Besonders bevorzugt liegt bei Anwesenheit von Er, Yb und / oder Nd auch Y vor.

Liegen wenigstens zwei Seltenerdelemente vor, sind dies besonders bevorzugt die Kombinationen Er und Yb mit $n \neq 0$ und $p \neq 0$, Nd und Yb mit $f \neq 0$ und $p \neq 0$ oder Er und Nd mit $n \neq 0$ und $f \neq 0$. Bei den erfindungsgemäßen Lumineszenzstoffen an sich liegt eine der obigen Kombinationen von wenigstens zwei Seltenerdelementen vor.

Sind gemäß der allgemeinen Formel Er oder Yb vorhanden, also wenn $n \neq 0$ oder $p \neq 0$, dann liegt vorzugsweise auch Pr, Nd und/oder Fe vor, womit gilt $e \neq 0$ und / oder $f \neq 0$ und / oder $v \neq 0$.

Ist gemäß der allgemeinen Formel Nd vorhanden, also wenn $f \neq 0$, dann liegt vorzugsweise auch Pr und/oder Fe vor, womit gilt $e \neq 0$ und / oder $v \neq 0$.

In dem Lumineszenzstoff der allgemeinen Formel $XZO_4$ des erfindungsgemäßen Sicherheitspapiers, Sicherheitselements und Wertdokuments steht X für $Y_b La_c Pr_e Nd_f Er_n Ybp Fe(III)v$ und $b + c + e + f + n + p + v = 1$ und b, c, e, f, n, p und v reichen jeweils von 0 bis 1.

Bevorzugt steht bei dem erfindungsgemäßen Sicherheitspapier, Sicherheitselement und Wertdokument X für $Y_b Yb_p Pr_e$, $b + e + p = 1$, b, e und p reichen jeweils von 0 bis 1, vorzugsweise gilt $0 < b < 1$ und $0 < e < 1$ und $0 < p < 1$.

Weiter bevorzugt steht bei dem erfindungsgemäßen Sicherheitspapier, Sicherheitselement und Wertdokument X für $Y_b Nd_f Fe(III)_v$, $b + f + v = 1$, b, f und v reichen jeweils von 0 bis 1, vorzugsweise gilt $0 < b < 1$ und $0 < f < 1$ und $0 < v < 1$.

Weiter bevorzugt steht bei dem erfindungsgemäßen Sicherheitspapier, Sicherheitselement und Wertdokument X für $Y_b Er_n$, $b + n = 1$, b und n reichen jeweils von 0 bis 1, vorzugsweise gilt $0 < b < 1$ und $0 < n < 1$.

Weiter bevorzugt steht bei dem erfindungsgemäßen Sicherheitspapier, Sicherheitselement und Wertdokument X für $Y_b Nd_f Er_n$, $b + f + n = 1$, b, f, und n reichen jeweils von 0 bis 1, vorzugsweise gilt $0 < b < 1$, $0 < f < 1$ und $0 < n < 1$.

Weiter bevorzugt steht bei dem erfindungsgemäßen Sicherheitspapier, Sicherheitselement und Wertdokument X für $Y_b Yb_p Nd_f$, $b + p + f = 1$, b, p und f reichen jeweils von 0 bis 1, vorzugsweise gilt $0 < b < 1$, $0 < p < 1$ und $0 < f < 1$.

Weiter bevorzugt steht bei dem erfindungsgemäßen Sicherheitspapier, Sicherheitselement und Wertdokument X für $Y_b Nd_f$, $b + f = 1$, b und f reichen jeweils von 0 bis 1, vorzugsweise gilt $0 < b < 1$ und $0 < f < 1$.

Weiter bevorzugt steht bei dem erfindungsgemäßen Sicherheitspapier, Sicherheitselement und Wertdokument X für $Y_b Yb_p$, $b + p = 1$, b und p reichen jeweils von 0 bis 1, vorzugsweise gilt $0 < b < 1$ und $0 < p < 1$.

Weiter bevorzugt steht bei dem erfindungsgemäßen Sicherheitspapier, Sicherheitselement und Wertdokument X für Y.

In der Formel $XZO_4$ steht Z für $Nb_{za} Ta_{zb}$, $za + zb = 1$ und za und zb reichen jeweils von 0 bis 1, vorzugsweise gilt $0 < za < 1$ und $0 < zb < 1$. In dieser Ausführungsform liegen Niobat-Tantalat-Mischungen vor.

Bevorzugt sind auch Sicherheitspapiere, Sicherheitselemente und Wertdokumente mit Lumineszenzstoffen mit den folgenden Formeln:

$$Y_b La_c Nb_{za} Ta_{zb} O_4,$$ wobei $b + c = 1$, $za + zb = 1$ und b, c, za und zb jeweils von 0 bis 1. reichen.

$$Y_b Yb_p NbO_4,$$ wobei b und p von 0 bis 1 reichen, $b + p = 1$. Insbesondere bevorzugt gilt $p > 0,5$.

$$Y_b Yb_p Nd_f NbO_4,$$ wobei b, p und f jeweils von 0 bis 1 reichen und $b + p + f = 1$.

Besonders bevorzugte sind Sicherheitspapiere, Sicherheitselemente und Wertdokumente mit den Verbindungen

a) $YNbO_4$;
(b) $Y_b Nd_f NbO_4$ mit $b + f = 1$ und $0 < b < 1$ und $0 < f < 1$;
(c) $Y_b Yb_p NbO_4$ mit $b + p = 1$ und $0 < b < 1$ und $0 < p < 1$;
(d) $Y_b Yb_p Nd_f NbO_4$ mit $b + p + f = 1$ und $0 < b < 1$ und $0 < p < 1$ und $0 < f < 1$;
(e) $Y_b Yb_p Nd_f NbO_4:(Mg,Al)$ mit $0 < b < 1$ und $0 < p < 1$ und $0 < f < 1$, wobei eine zusätzliche Dotierung mit Magnesium und Aluminium vorliegt;
(f) $Y_b Nd_f NbO_4:(Cr,Al)$ mit $0 < b < 1$ und $0 < f < 1$, wobei eine zusätzliche Dotierung mit Chrom und Aluminium vorliegt;
(g) $Y_b Yb_p Pr_e NbO_4$ mit $b + e + p = 1$ und $0 < b < 1$ und $0 < e < 1$ und $0 < p < 1$;
(h) $Y_b Nd_f Fe_v NbO_4$ mit $b + f + v = 1$ und $0 < b < 1$ und $0 < f < 1$ und $0 < v < 1$;
(i) $Y_b Er_n NbO_4$ mit $b + n = 1$ und $0 < b < 1$ und $0 < n < 1$;
(j) $Y_b Nd_f Er_n NbO_4$ mit $b + f + n = 1$ und $0 < b < 1$ und $0 < f < 1$ und $0 < n < 1$, wobei die Verbindungen (d), (e) und (j) auch als Lumineszenzstoffe an sich besonders bevorzugt sind.

Vorzugsweise gilt für alle Verbindungen, in denen Y und Yb vorliegen, dass der Anteil an Yb größer ist als der Anteil an Y.

Die Lagen und Formen (Intensität, Breite etc.) der Anregungs- und/oder Emissionsbanden sind abhängig von den Mengenverhältnissen der beteiligten Elemente, der Art der Elemente und der Art und Menge der Dotierstoffe.

Für die Absicherung von Wertdokumenten können sowohl breitbandige als auch schmalbandige Lumineszenz verwendet werden, aus Gründen der Selektivität wird jedoch die schmalbandige Lumineszenz bevorzugt.

Von Schmalbandigkeit einer Emission spricht man üblicherweise dann, wenn im Emissionsspektrum die auftretenden Banden eine mittlere Halbwertsbreite von kleiner 50 nm zeigen. Dies bedeutet jedoch nicht, dass Banden, die eine Halbwertbreite außerhalb dieses Bereichs aufweisen, nicht auch die erfindungsgemäße Aufgabe lösen.

Durch Variation und Kombination der erfindungsgemäßen Lumineszenzstoffe eröffnen sich zahlreiche Möglichkeiten, die Anregungs- und Emissionsspektren der erfindungsgemäßen Lumineszenzstoffe zu beeinflussen und so eine Vielzahl von Sicherheitsmerkmalen zu produzieren. Neben der Auswertung der Anregungs- und/ oder Emissionsspektren kann ebenso die Lumineszenzlebensdauer bzw. Abklingzeit zur Unterscheidung herangezogen werden. Bei der Auswertung können neben den Wellenlängen der Anregungs- bzw. Emissionslinien auch deren Anzahl und/ oder Form und/ oder deren Intensitäten berücksichtigt werden, womit sich eine beliebige Codierung darstellen lässt.

Ebenso ist es möglich, bei bestimmten erfindungsgemäßen Lumineszenzstoffen bzw. Lumineszenzstoffen der erfindungsgemäßen Sicherheitspapiere, Sicherheitselemente und Wertdokumente einen Energieübertrag zwischen gleichen und/ oder ungleichen Elementen zu erreichen, d.h. eine Quasiresonanz zu erzeugen, und für die Identifizierung zu nutzen.

Wird das Wertdokument statt mit einer mit mehreren der beschriebenen bzw. der erfindungsgemäßen lumineszierenden Substanzen markiert, so lässt sich die Anzahl der unterscheidbaren Kombinationen weiter steigern. Die "beschriebenen" Lumineszenzstoffe sind die Lumineszenzstoffe, die in den Patentansprüchen 12,13, und 18 angegeben sind. Werden zudem verschiedene Mischungsverhältnisse voneinander unterschieden, kann die Anzahl an Kombinationen nochmals gesteigert werden. Die Markierung kann dabei entweder an verschiedenen Stellen des Wertdokuments oder am gleichen Ort erfolgen. Wird der Lumineszenzstoff an verschiedenen Stellen des Wertdokumentes auf- bzw. eingebracht, kann so ein räumlicher Code, im einfachsten Fall z.B. ein Barcode, erzeugt werden.

Weiterhin lässt sich die Fälschungssicherheit des Wertdokuments erhöhen, wenn die spezielle gewählte lumineszierende Substanz z.B. in einem Wertdokument mit anderen Informationen des Wertdokuments verknüpft wird, so dass eine Überprüfung mittels eines geeigneten Algorithmus möglich ist. Selbstverständlich kann das Wertdokument neben der erfindungsgemäßen lumineszierenden Substanz noch weitere zusätzliche Echtheitsmerkmale, wie klassische Fluoreszenz und/ oder Magnetismus, aufweisen.

Die lumineszierenden Substanzen können gemäß der Erfindung auf verschiedenste Art und Weise in das Wertdokument eingebracht werden. So können die lumineszierenden Substanzen beispielsweise in eine Druckfarbe eingebracht werden. Aber auch ein Zumischen der lumineszierenden Substanz zur Papiermasse oder Kunststoffmasse bei der Herstellung eines Wertdokuments auf der Basis von Papier oder Kunststoff ist möglich. Ebenso können die lumineszierenden Substanzen auf oder in einem Kunststoffträgermaterial vorgesehen werden, welches beispielsweise wiederum zumindest teilweise in die Papiermasse eingebettet werden kann. Das Trägermaterial, das auf einem geeigneten Polymer, wie z.B. PMMA, basiert und in das die beschriebene bzw. die erfindungsgemäße lumineszierende Substanz eingebettet ist, kann hierbei die Form eines Sicherheitsfadens, einer Melierfaser oder einer Planchette haben. Ebenso lässt sich zur Produktsicherung die lumineszierende Substanz z.B. direkt in das Material des abzusichernden Gegenstandes, z.B. in Gehäusen und Plastikflaschen einbringen.

Das Kunststoff- oder Papierträgermaterial kann jedoch auch an jedem beliebigen anderen Gegenstand z.B. zur Produktsicherung befestigt werden. Das Trägermaterial ist in diesem Fall vorzugsweise in Form eines Etiketts ausgebildet. Wenn das Trägermaterial Bestandteil des zu sichernden Produkts ist, wie es z.B. bei Aufreißfäden der Fall ist, ist selbstverständlich auch jede andere Formgebung möglich. In bestimmten Anwendungsfällen kann es sinnvoll sein, die lumineszierende Substanz als unsichtbare Beschichtung auf dem Wertdokument vorzusehen. Sie kann dabei vollflächig oder auch in Form von bestimmten Mustern, wie z.B. Streifen, Linien, Kreisen, oder auch in Form von alphanumerischen Zeichen vorliegen. Um die Unsichtbarkeit des Lumineszenzstoffes zu gewährleisten, kann erfindungsgemäß entweder ein farbloser Lumineszenzstoff in der Druckfarbe oder dem Beschichtungslack verwendet werden oder ein farbiger Lumineszenzstoff in einer so geringen Konzentration, dass die Transparenz der Beschichtung gerade noch gegeben ist. Alternativ oder zusätzlich kann auch das Trägermaterial bereits geeignet eingefärbt sein, so dass farbige Lumineszenzstoffe aufgrund ihrer Eigenfarbe nicht wahrgenommen werden.

Üblicherweise werden die beschriebenen bzw. die erfindungsgemäßen lumineszierenden Substanzen in Form von Pigmenten verarbeitet. Zur besseren Verarbeitung oder zur Erhöhung ihrer Stabilität können die Pigmente insbesondere als individuell verkapselte Pigmentpartikel vorliegen oder mit einem anorganischen oder organischen Coating überzogen werden. Beispielsweise werden die einzelnen Pigmentteilchen hierzu mit einer Silicathülle umgeben und lassen sich so leichter in Medien dispergieren. Ebenso können verschiedene Pigmentpartikel einer Kombination gemeinsam verkapselt werden, z.B. in Fasern, Fäden, Silicathüllen. So ist es z.B. nicht mehr möglich, den "Code" der Kombination nachträglich zu verändern. Unter "Verkapselung" ist dabei ein vollständiges Umhüllen der Pigmentpartikel zu verstehen, während mit "Coating" auch das teilweise Umhüllen bzw. Beschichten der Pigmentpartikel gemeint ist.

Die beschriebenen bzw. die erfindungsgemäßen Lumineszenzstoffe zeichnen sich insbesondere durch ihre hohe Intensität im Emissionsspektrum und der einfachen Herstellung aus. Des Weiteren weisen die beschriebenen bzw.

die erfindungsgemäßen Lumineszenzstoffe den Vorteil auf, dass bereits durch einfache Variation in der elementaren Zusammensetzung die Lage der Emissionsbanden beeinflusst wird und so eine Vielzahl von unterscheidbaren Merkmalsstoffen zur Verfügung gestellt wird.

Im Folgenden werden einige Beispiele der beschriebenen bzw. der erfindungsgemäßen lumineszierenden Substanz näher erläutert.

Für die Präparation werden die Ausgangsstoffe in oxidischer Form oder Stoffe, die in Oxide überführt werden können, in einem geeigneten Verhältnis gemischt, dann geglüht, zerkleinert, gewaschen (z.B. mit Wasser), getrocknet und vermahlen.

Beispiel 1: $Y_{0,1}Yb_{0,9}TaO_4$ (nicht erfindungsgemäß als Verbindung an sich; Sicherheitspapiere, Sicherheitselemente und Wertdokumente mit der Verbindung sind erfindungsgemäß)

539,46 g $Ta_2O5$, 27,57 g $Y_2O_3$, 432,97 g $Yb_2O_3$ und 500,00 g $Na_2SO_4$ (reinst, wasserfrei) als Flussmittel werden in einem Paddelmischer innig durchmischt. Das Mischgut wird in einen Tiegel gefüllt und bei 1150 °C 6 bis 24 Stunden geglüht. Das nach Abschalten des Ofens 1 bis 2 Tage abgekühlte Material wird durch Waschen vom Sulfat befreit und mit einer gängigen Stiftmühle auf Feinheit gemahlen, die eine homogene und unsichtbare Einbringung in Papier oder Druckfarben ermöglicht.

Die so hergestellte Verbindung weist die Summenformel $Y_{0,1}Yb_{0,9}TaO_4$ auf.

Beispiel 2: $Y_{2,4}Yb_{0,3}Nd_{0,3}CaAlNb_2O_{12}$

| Komponente | Menge | Stoff | Reinheit |
|---|---|---|---|
| 1 | 359,660 g | $Y_2O_3$ | 5 N |
| 2 | 78,46 g | $Yb_2O_3$ | 4 N |
| 3 | 66,988 g | $Nd_2O_3$ | 4N |
| 4 | 74,431 g | CaO | p.a. |
| 5 | 67,662 g | $Al_2O_3$ | 4N |
| 6 | 352,80 g | $Nb_2O_5$ | 4N |
| 7 | 1000,00 g | $Na_2SO_4$ | (reinst) |

Die Komponenten 1 bis 7 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{2,4}Yb_{0,3}Nd_{0,3}CaAlNb_2O_{12}$ auf.

Beispiel 3: $Y_{0,65}Yb_{0,18}Er_{0,17}NbO_4$

| Komponente | Menge | Stoff | Reinheit |
|---|---|---|---|
| 1 | 267,58 g | $Y_2O_3$ | 5N |
| 2 | 129,31 g | $Yb_2O_3$ | 4N |
| 3 | 118,543 g | $Er_2O_3$ | 3N |
| 4 | 484,57 g | $Nb_2O_5$ | 4N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{0,65}Yb_{0,18}Er_{0,17}NbO_4$ auf.

Beispiel 4: $Y_{0,4}Yb_{0,5}Nd_{0,1}NbO_4$

| Komponente | Menge | Stoff | Reinheit |
|---|---|---|---|
| 1 | 153,92 g | $Y_2O_3$ | 5N |
| 2 | 335,77 g | $Yb_2O_3$ | 4N |
| 3 | 57,338 g | $Nd_2O_3$ | 3N |
| 4 | 452,970 g | $Nb_2O_5$ | 4N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.
Die so hergestellte Verbindung weist die Summenformel $Y_{0,4}Yb_{0,5}Nd_{0,1}NbO_4$ auf.

Beispiel 5: $Y_{0,099}Yb_{0,9}Pr_{0,001}NbO_4$ (nicht erfindungsgemäß als Verbindung an sich; Sicherheitspapiere, Sicherheitselemente und Wertdokumente mit der Verbindung sind erfindungsgemäß)

| Komponente | Menge | Stoff | Reinheit |
|---|---|---|---|
| 1 | 34,76 g | $Y_2O_3$ | 5N |
| 2 | 551,44 g | $Yb_2O_3$ | 4N |
| 3 | 0,51 g | $Pr_6O_{11}$ | 4N |
| 4 | 413,29 g | $Nb_2O_5$ | 4N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Bais $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.
Die so hergestellte Verbindung weist die Summenformel $Y_{0,099}Yb_{0,9}Pr_{0,001}NbO_4$ auf.

Beispiel 6: $Y_{0,967}Eu_{0,033}NbO_4$ (nicht erfindungsgemäß)

| Komponente | Menge | Stoff | Reinheit |
|---|---|---|---|
| 1 | 440,44 g | $Y_2O_3$ | 5 N |
| 2 | 23,42 g | $Eu_2O_3$ | 4 N |
| 3 | 536,14 g | $Nb_2O_5$ | 4 N |
| 4 | 1000,00 g | $Na_2SO_4$ | (reinst) |

Die Komponenten 1 bis 4 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.
Die so hergestellte Verbindung weist die Summenformel $Y_{0,967}Eu_{0,033}NbO_4$ auf.

Beispiel 7: $Y_{2,8}Er_{0,2}Nb_{0,60}Fe_4O_{12}$ (nicht erfindungsgemäß als Verbindung an sich; Sicherheitspapiere, Sicherheitselemente und Wertdokumente mit der Verbindung sind erfindungsgemäß)

| Komponente | Menge | Stoff | Reinheit |
|---|---|---|---|
| 1 | 419,55 g | $Y_2O_3$ | 5 N |
| 2 | 50,76 g | $Er_2O_3$ | 4 N |
| 3 | 105,83 g | $Nb_2O_5$ | 4 N |
| 4 | 423,86 g | $Fe_2O_3$ | Carbonyleisen |
| 5 | 500,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{2,8}Er_{0,2}Nb_{0,60}Fe_4O_{12}$ auf.

Weitere Ausführungsformen und Vorteile der Erfindung werden im Folgenden anhand der Figur erläutert. Die in der Figur gezeigten Proportionen entsprechen nicht unbedingt den in der Realität vorliegenden Verhältnissen und dienen vornehmlich zur Verbesserung der Anschaulichkeit.

Es zeigt

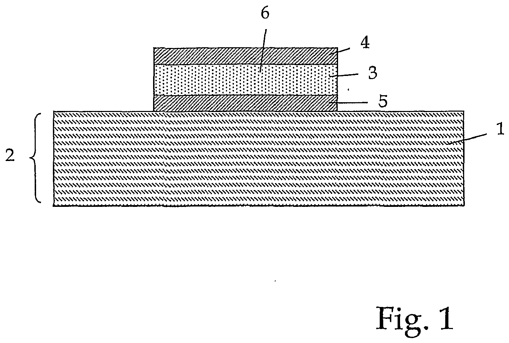

Fig. 1 erfindungsgemäßes Wertdokument im Querschnitt.

Fig. 1 zeigt eine Ausführungsform des erfindungsgemäßen Sicherheitselements. Das Sicherheitselement besteht in diesem Fall aus einem Etikett 2, das sich aus einer Papier- oder Kunststoffschicht 3, einer transparenten Abdeckschicht 4 sowie einer Klebstoffschicht 5 zusammensetzt. Dieses Etikett 2 ist über die Kleberschicht 5 mit einem beliebigen Substrat 1 verbunden. Bei diesem Substrat 1 kann es sich um Wertdokumente, Ausweise, Pässe, Urkunden oder dergleichen, aber auch um andere zu sichernde Gegenstände, wie beispielsweise CDs, Verpackungen o. Ä., handeln. Die lumineszierende Substanz 6 ist in diesem Ausführungsbeispiel im Volumen der Schicht 3 enthalten.

Alternativ könnte die lumineszierende Substanz auch in einer nicht gezeigten Druckfarbe enthalten sein, die auf eine der Etikettenschichten, vorzugsweise auf die Oberfläche der Schicht 3 aufgedruckt wird.

Statt den Lumineszenzstoff in oder auf einem Trägermaterial vorzusehen, das anschließend als Sicherheitselement auf einem Gegenstand befestigt wird, ist es gemäß der Erfindung auch möglich, die lumineszierende Substanz direkt in das zu sichernde Wertdokument bzw. auf dessen Oberfläche in Form einer Beschichtung vorzusehen.

**Patentansprüche**

1. Lumineszenzstoff der allgemeinen Formel

$XZO_4$

wobei X für $Y_bLa_cPr_eNd_fEr_nYb_pFe(III)_v$ steht und

$$b+c+e+f+n+p+v = 1$$

und b, c, e, f, n, p und v jeweils von 0 bis 1 reichen, wobei wenigstens zwei Seltenerdelemente in den Kombinationen Er und Yb mit $n \neq 0$ und $p \neq 0$ oder Nd und Yb mit $f \neq 0$ und $p \neq 0$ oder Er und Nd mit $n \neq 0$ und $f \neq 0$ vorliegen, Z für $Nb_{za}Ta_{zb}$ steht und

$$za + zb = 1$$

und za und zb jeweils von 0 bis 1 reichen.

2.  Lumineszenzstoff nach Anspruch 1, wobei $b \neq 0$ und/oder $c \neq 0$.

3.  Lumineszenzstoff nach Anspruch 1 oder 2, wobei $c \neq 0$ und/oder $e \neq 0$ und $f \neq 0$ und $n \neq 0$ und $p \neq 0$.

4.  Lumineszenzstoff nach wenigstens einem der Ansprüche 1 bis 3, wobei wenn $n \neq 0$ oder $p \neq 0$, dann gilt $f \neq 0$ und außerdem $e \neq 0$ und / oder $v \neq 0$.

5.  Lumineszenzstoff nach wenigstens einem der Ansprüche 1 bis 3, wobei wenn $f \neq 0$, dann gilt $e \neq 0$ und/ oder $v \neq 0$.

6.  Lumineszenzstoff nach wenigstens einem der Ansprüche 1 bis 5, wobei X für $Y_b$ $Nd_f$ $Er_n$ steht, $b + f + n = 1$ und $0 < b < 1, 0 < f < 1$ und $0 < n < 1$.

7.  Lumineszenzstoff nach wenigstens einem der Ansprüche 1 bis 5, wobei X für $Y_b$ $Yb_p Nd_f$ steht, $b + p + f = 1$ und $0 < b < 1$, $0 < p < 1$ und $0 < f < 1$.

8.  Lumineszenzstoff nach wenigstens einem der Ansprüche 1 bis 7, wobei der Lumineszenzstoff zusätzlich dotiert ist, vorzugsweise mit Al und/ oder Mg und/ oder Cr.

9.  Lumineszenzstoff nach wenigstens einem der Ansprüche 1 bis 8, wobei der Lumineszenzstoff zusätzlich dotiert ist mit (Al und Mg) oder (Aluminium und Cr).

10. Lumineszenzstoff nach wenigstens einem der Ansprüche 1 bis 9, wobei $0 < za < 1$ und $0 < zb < 1$.

11. Lumineszenzstoff nach wenigstens einem der Ansprüche 1 bis 9, wobei Z für Nb mit $za = 1$ oder Ta mit $zb = 1$ steht.

12. Sicherheitspapier, umfassend einen Lumineszenzstoff der allgemeinen Formel

$$XZO_4$$

wobei

X für $Y_b$ $La_c$ $Pr_e$ $Nd_f$ $Er_n$ $Yb_p$ $Fe(III)_v$
und
Z für $Nb_{za}$ $Ta_{zb}$
steht und

$$b + c + e + f + n + p + v = 1$$

und b, c, e, f, n, p und v jeweils von 0 bis 1 reichen, und

$$za + zb = 1$$

und za und zb jeweils von 0 bis 1 reichen.

13. Sicherheitselement, umfassend einen Lumineszenzstoff der allgemeinen Formel

$$XZO_4$$

wobei

X für $Y_b La_c Pr_e Nd_f Er_n Yb_p Fe(III)_v$
und
Z für $Nb_{za} Ta_{zb}$
steht und

$$b + c + e + f + n + p + v = 1$$

und b, c, e, f, n, p und v jeweils von 0 bis 1 reichen, und

$$za + zb = 1$$

und za und zb jeweils von 0 bis 1 reichen.

14. Sicherheitselement nach Anspruch 13, wobei das Sicherheitselement die Form eines Streifens oder Bandes aufweist.

15. Sicherheitselement nach Anspruch 13 oder 14, wobei das Element als Sicherheitsfaden, Planchette oder Melierfaser ausgebildet ist.

16. Sicherheitselement nach Anspruch 13, **dadurch gekennzeichnet, dass** das Sicherheitselement als Etikett ausgebildet ist.

17. Sicherheitselement nach wenigstens einem der Ansprüche 13 bis 16, **dadurch gekennzeichnet, dass** die wenigstens eine lumineszierende Substanz in ein Trägermaterial des Sicherheitselementes eingebettet oder auf das Trägermaterial aufgebracht ist.

18. Wertdokument, umfassend einen Lumineszenzstoff der allgemeinen Formel

$XZO_4$

wobei

X für $Y_b La_c Pr_e Nd_f Er_n Yb_p Fe(III)_v$
und
Z für $Nb_{za} Ta_{zb}$
steht und

$$b + c + e + f + n + p + v = 1$$

und b, c, e, f, n, p und v jeweils von 0 bis 1 reichen, und

$$za + zb = 1$$

und za und zb jeweils von 0 bis 1 reichen.

19. Wertdokument nach Anspruch 18, wobei das Wertdokument aus Papier oder Kunststoff besteht.

20. Wertdokument nach Anspruch 18 oder 19, wobei der Lumineszenzstoff in das Volumen des Wertdokumentes eingebracht oder in einer auf dem Wertdokument aufgebrachten Schicht vorliegt.

21. Wertdokument nach wenigstens einem der Ansprüche 18 bis 20, wobei die lumineszierende Substanz als unsichtbare, die Oberfläche des Wertdokumentes zumindest teilweise bedeckende Beschichtung vorgesehen ist.

**22.** Wertdokument nach wenigstens einem der Ansprüche 18 bis 21, wobei die lumineszierende Substanz einer Druckfarbe zugemischt ist.

**23.** Wertdokument nach wenigstens einem der Ansprüche 18 bis 22, wobei die Beschichtung die Form eines oder mehrerer Streifen aufweist.

**24.** Wertdokument nach wenigstens einem der Ansprüche 18 bis 23, wobei die lumineszierende Substanz als Pigmentpartikel vorliegt.

**25.** Sicherheitspapier nach Anspruch 12 oder Sicherheitselement nach wenigstens einem der Ansprüche 13 bis 17 oder Wertdokument nach wenigstens einem der Ansprüche 18 bis 24, wobei in dem Lumineszenzstoff $b \neq 0$ und/ oder $c \neq 0$.

**26.** Sicherheitspapier oder Sicherheitselement oder Wertdokument nach wenigstens einem der Ansprüche 12 bis 25, wobei in dem Lumineszenzstoff $b + c = 1$ und $0 < b < 1$ und $0 < c < 1$.

**27.** Sicherheitspapier oder Sicherheitselement oder Wertdokument nach wenigstens einem der Ansprüche 12 bis 25, wobei in dem Lumineszenzstoff $c = 1$ oder $b = 1$.

**28.** Sicherheitspapier oder Sicherheitselement oder Wertdokument nach wenigstens einem der Ansprüche 12 bis 25, wobei in dem Lumineszenzstoff $c \neq 0$ und/ oder $e \neq 0$ und/ oder $f \neq 0$ und/ oder $n \neq 0$ und/ oder $p \neq 0$.

**29.** Sicherheitspapier oder Sicherheitselement oder Wertdokument nach wenigstens einem der Ansprüche 12 bis 25 und 28, wobei in dem Lumineszenzstoff
$n \neq 0$ und $p \neq 0$ oder
$f \neq 0$ und $p \neq 0$ oder
$n \neq 0$ und $f \neq 0$.

**30.** Sicherheitspapier oder Sicherheitselement oder Wertdokument nach wenigstens einem der Ansprüche 12 bis 25 und 28 bis 29, wobei wenn in dem Lumineszenzstoff $n \neq 0$ oder $p \neq 0$, dann gilt $e \neq 0$ und/oder $f \neq 0$ und/ oder $v \neq 0$.

**31.** Sicherheitspapier oder Sicherheitselement oder Wertdokument nach wenigstens einem der Ansprüche 12 bis 25 und 28 bis 30, wobei wenn in dem Lumineszenzstoff $f \neq 0$, dann gilt $e \neq 0$ und/ oder $v \neq 0$.

**32.** Sicherheitspapier oder Sicherheitselement oder Wertdokument nach wenigstens einem der Ansprüche 12 bis 25, 27, 28 und 30, wobei in dem Lumineszenzstoff X für $Y_b Yb_p Pr_e$ steht, $b + e + p = 1$ und b, e und p jeweils von 0 bis 1 reichen, vorzugsweise gilt $0 < b < 1$ und $0 < e < 1$ und $0 < p < 1$.

**33.** Sicherheitspapier oder Sicherheitselement oder Wertdokument nach wenigstens einem der Ansprüche 12 bis 25, 28 und 31, wobei in dem Lumineszenzstoff X für $Y_b Nd_f Fe(III)_v$ steht, $b + v + f = 1$ und b, f und v jeweils von 0 bis 1 reichen, vorzugsweise gilt $0 < b < 1$ und $0 < f < 1$ und $0 < v < 1$.

**34.** Sicherheitspapier oder Sicherheitselement oder Wertdokument nach wenigstens einem der Ansprüche 12 bis 25 und 28, wobei in dem Lumineszenzstoff X für $Y_b Er_n$ steht, $b + n = 1$ und b und n jeweils von 0 bis 1 reichen, vorzugsweise gilt $0 < b < 1$ und $0 < n < 1$.

**35.** Sicherheitspapier oder Sicherheitselement oder Wertdokument nach wenigstens einem der Ansprüche 12 bis 25 und 28 bis 30, wobei in dem Lumineszenzstoff X für $Y_b Nd_f Er_n$ steht, $b + f + n = 1$ und b, f, und n jeweils von 0 bis 1 reichen, vorzugsweise gilt $0 < b < 1$, $0 < f < 1$ und $0 < n < 1$.

**36.** Sicherheitspapier oder Sicherheitselement oder Wertdokument nach wenigstens einem der Ansprüche 12 bis 25 und 28 bis 30, wobei in dem Lumineszenzstoff X für $Y_b Yb_p Nd_f$ steht, $b + p + f = 1$ und b, p und f jeweils von 0 bis 1 reichen, vorzugsweise gilt $0 < b < 1$, $0 < p < 1$ und $0 < f < 1$.

**37.** Sicherheitspapier oder Sicherheitselement oder Wertdokument nach wenigstens einem der Ansprüche 12 bis 25, wobei in dem Lumineszenzstoff X für $Y_b Nd_f$ steht, $b + f = 1$ und b und f jeweils von 0 bis 1 reichen, vorzugsweise gilt $0 < b < 1$ und $0 < f < 1$.

**38.** Sicherheitspapier oder Sicherheitselement oder Wertdokument nach wenigstens einem der Ansprüche 12 bis 25, wobei in dem Lumineszenzstoff X für $Y_bYb_p$ steht, b + p = 1 und b und p jeweils von 0 bis 1 reichen, vorzugsweise gilt 0 < b < 1 und 0 < p < 1.

39. Sicherheitspapier oder Sicherheitselement oder Wertdokument nach wenigstens einem der Ansprüche 12 bis 38, wobei der Lumineszenzstoff zusätzlich dotiert ist, vorzugsweise mit Al und/oder Mg und/ oder Cr.

40. Sicherheitspapier oder Sicherheitselement oder Wertdokument nach wenigstens einem der Ansprüche 12 bis 39, wobei der Lumineszenzstoff zusätzlich dotiert ist mit (Al und Mg) oder (Aluminium und Cr).

41. Sicherheitspapier oder Sicherheitselement oder Wertdokument nach wenigstens einem der Ansprüche 12 bis 40, wobei in dem Lumineszenzstoff 0 < za < 1 und 0 < zb < 1.

42. Sicherheitspapier oder Sicherheitselement oder Wertdokument nach wenigstens einem der Ansprüche 12 bis 41, wobei in dem Lumineszenzstoff Z für Nb mit za = 1 oder Ta mit zb = 1 steht.

43. Verfahren zur Herstellung eines Wertdokuments nach wenigstens einem der Ansprüche 18 bis 42, **dadurch gekennzeichnet, dass** die lumineszierende Substanz einer Druckfarbe zugesetzt wird und/oder durch einen Beschichtungsprozess aufgetragen wird.

44. Verfahren zur Herstellung eines Wertdokuments nach wenigstens einem der Ansprüche 18 bis 42, **dadurch gekennzeichnet, dass** die lumineszierende Substanz in das Volumen des Wertdokumentes eingearbeitet wird.

45. Verfahren zur Herstellung eines Wertdokuments nach wenigstens einem der Ansprüche 18 bis 42, **dadurch gekennzeichnet, dass** die lumineszierende Substanz durch entsprechend präparierte Melierfasern dem Wertdokument zugeführt wird.

46. Verfahren zur Herstellung eines Wertdokuments nach wenigstens einem der Ansprüche 18 bis 42, **dadurch gekennzeichnet, dass** die lumineszierende Substanz durch einen entsprechend präparierten Sicherheitsfaden dem Wertdokument zugeführt wird.

47. Prüfverfahren zur Echtheitsprüfung eines Wertdokumentes nach wenigstens einem der Ansprüche 18 bis 42 oder eines Sicherheitselementes nach wenigstens einem der Ansprüche 13 bis 17 oder 25 bis 42, **dadurch gekennzeichnet, dass** die Lumineszenzlebensdauern und/ oder Wellenlängen und/ oder Anzahl und/ oder die Form und/ oder die Intensitäten der Emissionslinien und/ oder der Anregungsbanden der lumineszierenden Substanzen ausgewertet werden.

**Claims**

1. A luminescent substance of the general formula

$$XZO_4$$

wherein X stands for $Y_bLa_cPr_eNd_fEr_nYb_pFe(III)_v$ and

$$b + c + e + f + n + p + v = 1$$

and b, c, e, f, n, p and v each range from 0 to 1,
wherein at least two rare earth elements are present in the combinations Er and Yb with $n \neq 0$ and $p \neq 0$ or
Nd and Yb with $f \neq 0$ and $p \neq 0$ or
Er and Nd with $n \neq 0$ and $f \neq 0$,
Z stands for $Nb_{za}Ta_{zb}$
and

$$za + zb = 1$$

and za and zb each range from 0 to 1.

2. The luminescent substance according to claim 1, wherein $b \neq 0$ and/or $c \neq 0$.

3. The luminescent substance according to claim 1 or 2, wherein $c \neq 0$ and/or $e \neq 0$ and $f \neq 0$ and $n \neq 0$ and $p \neq 0$.

4. The luminescent substance according to at least one of the claims 1 to 3, wherein if $n \neq 0$ or $p \neq 0$, then there is applicable $f \neq 0$ and further $e \neq 0$ and/or $v \neq 0$.

5. The luminescent substance according to at least one of the claims 1 to 3, wherein if $f \neq 0$, then there is applicable $e \neq 0$ and/or $v \neq 0$.

6. The luminescent substance according to at least one of the claims 1 to 5, wherein X stands for $Y_b Nd_r Er_n$, $b + f + n = 1$ and $0 < b < 1$, $0 < f < 1$ and $0 < n < 1$.

7. The luminescent substance according to at least one of the claims 1 to 5, wherein X stands for $Y_b Yb_p Nd_f$, $b + p + f = 1$ and $0 < b < 1$, $0 < p < 1$ and $0 < f < 1$.

8. The luminescent substance according to at least one of the claims 1 to 7, wherein the luminescent substance is additionally doped, preferably with Al and/or Mg and/or Cr.

9. The luminescent substance according to at least one of the claims 1 to 8, wherein the luminescent substance is additionally doped with (Al and Mg) or (aluminum and Cr).

10. The luminescent substance according to at least one of the claims 1 to 9, wherein $0 < za < 1$ and $0 < zb < 1$.

11. The luminescent substance according to at least one of the claims 1 to 9, wherein Z stands for Nb with $za = 1$ or Ta with $zb = 1$.

12. A security paper, including a luminescent substance of the general formula

$$XZO_4$$

wherein

X stands for $Y_b La_c Pr_e Nd_r Er_n Yb_p Fe(III)_v$ and
Z stands for $Nb_{za} Ta_{zb}$ and

$$b + c + e + f + n + p + v = 1$$

and b, c, e, f, n, p and v each range from 0 to 1, and

$$za + zb = 1$$

and za and zb each range from 0 to 1.

13. A security element, including a luminescent substance of the general formula

$$XZO_4$$

wherein

X stands for $Y_b La_c Pr_e Nd_f Er_n Yb_p Fe(III)_v$ and
Z stands for $Nb_{za} Ta_{zb}$ and

$$b' + c + e + f + n + p + v = 1$$

and b, c, e, f, n, p and v each range from 0 to 1, and

$$za + zb = 1$$

and za and zb each range from 0 to 1.

14. The security element according to claim 13, wherein the security element has the form of a strip or band.

15. The security element according to claim 13 or 14, wherein the element is formed as a security thread, planchet or mottling fiber.

16. The security element according to claim 13, **characterized in that** the security element is formed as a label.

17. The security element according to at least one of the claims 13 to 16, **characterized in that** the at least one luminescent substance is embedded in a carrier material of the security element or applied to the carrier material.

18. A value document, including a luminescent substance of the general formula

$$XZO_4$$

wherein

X stands for $Y_bLa_cPr_eNd_rEr_nYb_pFe(III)_v$ and
Z stands for $Nb_{za}Ta_{zb}$ and

$$b + c + e + f + n + p + v = 1$$

and b, c, e, f, n, p and v each range from 0 to 1, and

$$za + zb = 1$$

and za and zb each range from 0 to 1.

19. The value document according to claim 18, wherein the value document consists of paper or plastic.

20. The value document according to claim 18 or 19, wherein the luminescent substance is incorporated into the volume of the value document or present in a layer applied to the value document.

21. The value document according to at least one of the claims 18 to 20, wherein the luminescent substance is provided as an invisible coating at least partly covering the surface of the value document.

22. The value document according to at least one of the claims 18 to 21, wherein the luminescent substance is admixed to a printing ink.

23. The value document according to at least one of the claims 18 to 22, wherein the coating has the form of one or several strips.

24. The value document according to at least one of the claims 18 to 23, wherein the luminescent substance is present as pigment particles.

25. The security paper according to claim 12 or the security element according to at least one of the claims 13 to 17 or the value document according to at least one of the claims 18 to 24, wherein in the luminescent substance $b \neq 0$ and/or $c \neq 0$.

26. The security paper or the security element or the value document according to at least one of the claims 12 to 25, wherein in the luminescent substance $b + c = 1$ and $0 < b < 1$ and $0 < c < 1$.

27. The security paper or the security element or the value document according to at least one of the claims 12 to 25, wherein in the luminescent substance $c = 1$ or $b = 1$.

28. The security paper or the security element or the value document according to at least one of the claims 12 to 25, wherein in the luminescent substance $c \neq 0$ and/or $e \neq 0$ and/or $f \neq 0$ and/or $n \neq 0$ and/or $p \neq 0$.

29. The security paper or the security element or the value document according to at least one of the claims 12 to 25 and 28, wherein in the luminescent substance
$n \neq 0$ and $p \neq 0$ or
$f \neq 0$ and $p \neq 0$ or
$n \neq 0$ and $f \neq 0$.

30. The security paper or the security element or the value document according to at least one of the claims 12 to 25 and 28 to 29, wherein if in the luminescent substance $n \neq 0$ or $p \neq 0$, then there is applicable $e \neq 0$ and/or $f \neq 0$ and/or $v \neq 0$.

31. The security paper or the security element or the value document according to at least one of the claims 12 to 25 and 28 to 30, wherein if in the luminescent substance $f \neq 0$, then there is applicable $e \neq 0$ and/or $v \neq 0$.

32. The security paper or the security element or the value document according to at least one of the claims 12 to 25, 27, 28 and 30, wherein in the luminescent substance X stands for $Y_b Yb_p Pr_e$, $b + e + p = 1$ and b, e and p each range from 0 to 1, preferably there is applicable $0 < b < 1$ and $0 < e < 1$ and $0 < p < 1$.

33. The security paper or the security element or the value document according to at least one of the claims 12 to 25, 28 and 31, wherein in the luminescent substance X stands for $Y_b Nd_f Fe(III)_v$, $b + v + f = 1$ and b, f and v each range from 0 to 1, preferably there is applicable $0 < b < 1$ and $0 < f < 1$ and $0 < v < 1$.

34. The security paper or the security element or the value document according to at least one of the claims 12 to 25 and 28, wherein in the luminescent substance X stands for $Y_b Er_n$, $b + n = 1$ and b and n each range from 0 to 1, preferably there is applicable $0 < b < 1$ and $0 < n < 1$.

35. The security paper or the security element or the value document according to at least one of the claims 12 to 25 and 28 to 30, wherein in the luminescent substance X stands for $Y_b Nd_f Er_n$, $b + f + n = 1$ and b, f, and n each range from 0 to 1, preferably there is applicable $0 < b < 1$, $0 < f < 1$ and $0 < n < 1$.

36. The security paper or the security element or the value document according to at least one of the claims 12 to 25 and 28 to 30, wherein in the luminescent substance X stands for $Y_b Yb_p Nd_f$, $b + p + f = 1$ and b, p and f each range from 0 to 1, preferably there is applicable $0 < b < 1$, $0 < p < 1$ and $0 < f < 1$.

37. The security paper or the security element or the value document according to at least one of the claims 12 to 25, wherein in the luminescent substance X stands for $Y_b Nd_f$, $b + f = 1$ and b and f each range from 0 to 1, preferably there is applicable $0 < b < 1$ and $0 < f < 1$.

38. The security paper or the security element or the value document according to at least one of the claims 12 to 25, wherein in the luminescent substance X stands for $Y_b Yb_p$, $b + p = 1$ and b and p each range from 0 to 1, preferably there is applicable $0 < b < 1$ and $0 < p < 1$.

39. The security paper or the security element or the value document according to at least one of the claims 12 to 38, wherein the luminescent substance is additionally doped, preferably with Al and/or Mg and/or Cr.

40. The security paper or the security element or the value document according to at least one of the claims 12 to 39, wherein the luminescent substance is additionally doped with (Al and Mg) or (aluminum and Cr).

**41.** The security paper or the security element or the value document according to at least one of the claims 12 to 40, wherein in the luminescent substance 0 < za < 1 and 0 < zb < 1.

**42.** The security paper or the security element or the value document according to at least one of the claims 12 to 41, wherein in the luminescent substance Z stands for Nb with za = 1 or Ta with zb = 1.

**43.** A method for manufacturing a value document according to at least one of the claims 18 to 42, **characterized in that** the luminescent substance is added to a printing ink and/or is applied by a coating process.

**44.** A method for manufacturing a value document according to at least one of the claims 18 to 42, **characterized in that** the luminescent substance is incorporated into the volume of the value document.

**45.** A method for manufacturing a value document according to at least one of the claims 18 to 42, **characterized in that** the luminescent substance is supplied to the value document by correspondingly prepared mottling fibers.

**46.** A method for manufacturing a value document according to at least one of the claims 18 to 42, **characterized in that** the luminescent substance is supplied to the value document by a correspondingly prepared security thread.

**47.** A test method for checking the authenticity of a value document according to at least one of the claims 18 to 42 or of a security element according to at least one of the claims 13 to 17 or 25 to 42, **characterized in that** the lifetimes of luminescence and/or wavelengths and/or number and/or the form and/or the intensities of the emission lines and/or the excitation bands of the luminescent substances are evaluated.

**Revendications**

**1.** Substance luminescente répondant à la formule générale

$$XZO_4$$

X représentant $X_b La_c Pr_e Nd_f Er_n Yb_p Fe(III)_v$ et

$$b+c+e+f+n+p+v = 1$$

et b, c, e, f, n, p et v allant respectivement de 0 à 1,
au moins deux éléments de terres rares se trouvant dans les combinaisons Er et Yb avec $n \neq 0$ et $p \neq 0$ ou
Nd et Yb avec $f \neq 0$ et $p \neq 0$ ou
Er et Nd avec $n \neq 0$ et $f \neq 0$,
Z représentant $Nb_{za} Ta_{zb}$
et

$$za + zb = 1$$

et za et zb allant respectivement de 0 à 1.

**2.** Substance luminescente selon la revendication 1, cependant que $b \neq 0$ et/ou $c \neq 0$.

**3.** Substance luminescente selon la revendication 1 ou 2, cependant que $c \neq 0$ et/ou $e \neq 0$ et $f \neq 0$ et $n \neq 0$ et $p \neq 0$.

**4.** Substance luminescente selon au moins une des revendications de 1 à 3, cependant que, quand $n \neq 0$ ou $p \neq 0$, alors $f \neq 0$ et en outre $e \neq 0$ et/ou $v \neq 0$.

**5.** Substance luminescente selon au moins une des revendications de 1 à 3, cependant que, quand $f \neq 0$, alors $e \neq 0$ et/ou $v \neq 0$.

**6.** Substance luminescente selon au moins une des revendications de 1 à 5, cependant que X représente $Y_b\,Nd_f\,Er_n$, b + f + n = 1 et 0 < b < 1, 0 < f < 1 et 0 < n < 1.

**7.** Substance luminescente selon au moins une des revendications de 1 à 5, cependant que X représente $Y_b\,Yb_p Nd_f$, b + p + f = 1 et 0 < b < 1, 0 < p < 1 et 0 < f < 1.

**8.** Substance luminescente selon au moins une des revendications de 1 à 7, cependant que la substance luminescente est additionnellement dopée, de préférence au Al et/ou au Mg et/ou au Cr.

**9.** Substance luminescente selon au moins une des revendications de 1 à 8, cependant que la substance luminescente est additionnellement dopée au (Al et Mg) ou au (aluminium et Cr).

**10.** Substance luminescente selon au moins une des revendications de 1 à 9, cependant que 0 < za < 1 et 0 < zb < 1.

**11.** Substance luminescente selon au moins une des revendications de 1 à 9, cependant que Z représente Nb avec za = 1 ou Ta avec zb = 1.

**12.** Papier de sécurité comprenant une substance luminescente répondant à la formule générale

$$XZO_4$$

X représentant $Y_b\,La_c\,Pr_e\,Nd_f\,Er_n\,Yb_p\,Fe(III)_v$
et
Z représentant $Nb_{za}\,Ta_{zb}$
et

$$b + c + e + f + n + p + v = 1$$

et b, c, e, f, n, p et v allant respectivement de 0 à 1, et

$$za + zb = 1$$

et za et zb allant respectivement de 0 à 1.

**13.** Élément de sécurité comprenant une substance luminescente répondant à la formule générale

$$XZO_4$$

X représentant $Y_b\,La_c\,Pr_e\,Nd_f\,Er_n\,Yb_p\,Fe(III)_v$
et
Z représentant $Nb_{za}\,Ta_{zb}$
et

$$b + c + e + f + n + p + v = 1$$

et b, c, e, f, n, p et v allant respectivement de 0 à 1, et

$$za + zb = 1$$

et za et zb allant respectivement de 0 à 1.

**14.** Élément de sécurité selon la revendication 13, l'élément de sécurité ayant la forme d'un ruban ou d'une bande.

**15.** Élément de sécurité selon la revendication 13 ou 14, l'élément étant réalisé en tant que fil de sécurité, planchette ou fibre chinée.

**16.** Élément de sécurité selon la revendication 13, **caractérisé en ce que** l'élément de sécurité est réalisé en tant qu'étiquette.

**17.** Élément de sécurité selon au moins une des revendications de 13 à 16, **caractérisé en ce que** la au moins une substance luminescente est incorporée dans un matériau support de l'élément de sécurité ou est appliquée sur le matériau support.

**18.** Document de valeur comprenant une substance luminescente répondant à la formule générale

$$XZO_4$$

X représentant $Y_b\, La_c\, Pr_e\, Nd_f\, Er_n\, Yb_p\, Fe(III)_v$
et
Z représentant $Nb_{za}\, Ta_{zb}$
et

$$b + c + e + f + n + p + v = 1$$

et b, c, e, f, n, p et v allant respectivement de 0 à 1, et

$$za + zb = 1$$

et za et zb allant respectivement de 0 à 1.

**19.** Document de valeur selon la revendication 18, le document de valeur consistant en du papier ou de la matière plastique.

**20.** Document de valeur selon la revendication 18 ou 19, la substance luminescente étant insérée dans le volume du document de valeur ou se trouvant dans une couche appliquée sur le document de valeur.

**21.** Document de valeur selon au moins une des revendications de 18 à 20, la substance luminescente étant prévue sous forme de revêtement invisible recouvrant au moins partiellement la surface du document de valeur.

**22.** Document de valeur selon au moins une des revendications de 18 à 21, la substance luminescente étant mélangée à une encre d'impression.

**23.** Document de valeur selon au moins une des revendications de 18 à 22, le revêtement ayant la forme d'un ou de plusieurs rubans.

**24.** Document de valeur selon au moins une des revendications de 18 à 23, la substance luminescente se trouvant sous forme de particules de pigment.

**25.** Papier de sécurité selon la revendication 12 ou élément de sécurité selon au moins une des revendications de 13 à 17 ou document de valeur selon au moins une des revendications de 18 à 24, cependant que, dans la substance luminescente, $b \neq 0$ et/ou $c \neq 0$.

**26.** Papier de sécurité ou élément de sécurité ou document de valeur selon au moins une des revendications de 12 à 25, cependant que, dans la substance luminescente, $b + c = 1$ et $0 < b < 1$ et $0 < c < 1$.

**27.** Papier de sécurité ou élément de sécurité ou document de valeur selon au moins une des revendications de 12 à 25, cependant que, dans la substance luminescente, $c = 1$ ou $b = 1$.

28. Papier de sécurité ou élément de sécurité ou document de valeur selon au moins une des revendications de 12 à 25, cependant que, dans la substance luminescente, c ≠ 0 et/ou e ≠ 0 et/ou f ≠ 0 et/ou n ≠ 0 et/ou p ≠ 0.

29. Papier de sécurité ou élément de sécurité ou document de valeur selon au moins une des revendications de 12 à 25 et 28, cependant que, dans la substance luminescente,
n ≠ 0 et p ≠ 0 ou
f ≠ 0 et p ≠ 0 ou
n ≠ 0 et f ≠ 0.

30. Papier de sécurité ou élément de sécurité ou document de valeur selon au moins une des revendications de 12 à 25 et de 28 à 29, cependant que, quand dans la substance luminescente n ≠ 0 ou p ≠ 0, alors e ≠ 0 et/ou f ≠ 0 et/ou v ≠ 0.

31. Papier de sécurité ou élément de sécurité ou document de valeur selon au moins une des revendications de 12 à 25 et de 28 à 30, cependant que, quand dans la substance luminescente f ≠ 0, alors e ≠ 0 et/ou v ≠ 0.

32. Papier de sécurité ou élément de sécurité ou document de valeur selon au moins une des revendications de 12 à 25, 27, 28 et 30, cependant que, dans la substance luminescente, X représente $Y_b Yb_p Pr_e$, b + e + p = 1 et b, e et p vont respectivement de 0 à 1, on ayant de préférence 0 < b < 1 et 0 < e < 1 et 0 < p < 1.

33. Papier de sécurité ou élément de sécurité ou document de valeur selon au moins une des revendications de 12 à 25, 28 et 31, cependant que, dans la substance luminescente, X représente $Y_b Nd_f Fe(III)_v$, b + v + f = 1 et b, f et v vont respectivement de 0 à 1, on ayant de préférence 0 < b < 1 et 0 < f < 1 et 0 < v < 1.

34. Papier de sécurité ou élément de sécurité ou document de valeur selon au moins une des revendications de 12 à 25 et 28, cependant que, dans la substance luminescente, X représente $Y_b Er_n$, b + n = 1 et b et n vont respectivement de 0 à 1, on ayant de préférence 0 < b < 1 et 0 < n < 1.

35. Papier de sécurité ou élément de sécurité ou document de valeur selon au moins une des revendications de 12 à 25 et de 28 à 30, cependant que, dans la substance luminescente, X représente $Y_b Nd_f Er_n$, b + f + n = 1 et b, f et n vont respectivement de 0 à 1, on ayant de préférence 0 < b < 1, 0 < f < 1 et 0 < n < 1.

36. Papier de sécurité ou élément de sécurité ou document de valeur selon au moins une des revendications de 12 à 25 et de 28 à 30, cependant que, dans la substance luminescente, X représente $Y_b Yb_p Nd_f$, b + p + f = 1 et b, p et vont respectivement de 0 à 1, on ayant de préférence 0 < b < 1, 0 < p < 1 et 0 < f < 1.

37. Papier de sécurité ou élément de sécurité ou document de valeur selon au moins une des revendications de 12 à 25, cependant que, dans la substance luminescente, X représente $Y_b Nd_f$, b + f = 1 et b et f vont respectivement de 0 à 1, on ayant de préférence 0 < b < 1 et 0 < f < 1.

38. Papier de sécurité ou élément de sécurité ou document de valeur selon au moins une des revendications de 12 à 25, cependant que, dans la substance luminescente, X représente $Y_b Yb_p$, b + p = 1 et b et p vont respectivement de 0 à 1, on ayant de préférence 0 < b < 1 et 0 < p < 1.

39. Papier de sécurité ou élément de sécurité ou document de valeur selon au moins une des revendications de 12 à 38, la substance luminescente étant additionnellement dopée, de préférence au Al et/ou au Mg et/ou au Cr.

40. Papier de sécurité ou élément de sécurité ou document de valeur selon au moins une des revendications de 12 à 39, la substance luminescente étant additionnellement dopée au (Al et Mg) ou au (aluminium et Cr).

41. Papier de sécurité ou élément de sécurité ou document de valeur selon au moins une des revendications de 12 à 40, cependant que, dans la substance luminescente, 0 < za < 1 et 0 < zb < 1.

42. Papier de sécurité ou élément de sécurité ou document de valeur selon au moins une des revendications de 12 à 41, cependant que, dans la substance luminescente, Z représente Nb avec za = 1 ou Ta avec zb = 1.

43. Procédé de fabrication d'un document de valeur selon au moins une des revendications de 18 à 42, caractérisé en ce la substance luminescente est ajoutée à une encre d'impression et/ou est appliquée par une processus de revêtement.

**44.** Procédé de fabrication d'un document de valeur selon au moins une des revendications de 18 à 42, caractérisé en ce la substance luminescente est intégrée dans le volume du document de valeur.

**45.** Procédé de fabrication d'un document de valeur selon au moins une des revendications de 18 à 42, caractérisé en ce la substance luminescente est introduite dans le document de valeur par des fibres chinées préparées à cet effet.

**46.** Procédé de fabrication d'un document de valeur selon au moins une des revendications de 18 à 42, caractérisé en ce la substance luminescente est introduite dans le volume du document de valeur par un fil de sécurité préparé à cet effet.

**47.** Procédé de vérification pour la vérification de l'authenticité d'un document de valeur selon au moins une des revendications de 18 à 42 ou d'un élément de sécurité selon au moins une des revendications de 13 à 17 ou 25 à 42, caractérisé en ce les longévités de la luminescence et/ou les longueurs d'onde et/ou le nombre et/ou la forme et/ou l'intensité des lignes d'émission et/ou des bandes d'excitation des substances luminescentes sont évalués.

Fig. 1

**EP 1 836 273 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0052624 B2
- WO 03104533 A1
- EP 1241242 A2
- US 6506476 B1